# EUROPEAN PATENT APPLICATION

(11) **EP 4 831 837 A1**
(43) Date of publication of application: **28.10.2026**
(21) Application number: 25211258.6
(22) Date of filing: 27.10.2025
(51) Int. Cl.: G06F 16/906

(54) **CLASSIFICATION METHOD AND CLASSIFICATION SYSTEM FOR OUTPUTTING DATA TRANSMITTED ON BLOCKCHAIN, DEVICE, AND MEDIUM**

(30) Priority: 25.04.2025 CN 202510529359
(71) Applicant: Yunnan Power Grid Co., Ltd., Kunming, Yunnan 675000 (CN)
(72) Inventor: Zhao, Yitao, Kunming, Yunnan, 675000 (CN); Xing, Zhiyi, Kunming, Yunnan, 675000 (CN); Shen, Xin, Kunming, Yunnan, 675000 (CN); Dong, Linlin, Kunming, Yunnan, 675000 (CN); Li, Jiahao, Kunming, Yunnan, 675000 (CN); Lin, Cong, Kunming, Yunnan, 675000 (CN); Liu, Qingchan, Kunming, Yunnan, 675000 (CN); Yin, Yujun, Kunming, Yunnan, 675000 (CN); He, Zhaolei, Kunming, Yunnan, 675000 (CN)
(74) Representative: Meyer-Dulheuer MD Legal Patentanwälte PartG mbB

(57) **Abstract**

Provided are a classification method and a classification system for outputting data transmitted on a blockchain, a device, and a medium, belonging to the technical field of data classification and blockchain data. The method includes the following steps: acquiring raw data in a list of data transmitted on a blockchain from a data source, and performing pre-processing and diversified proofreading on the raw data, including removing abnormal values, supplementing missing values, and correcting erroneous values; formulating a data classification rule according to a business demand, and identifying a data classification feature using a clustering method; classifying and calibrating data based on the classification feature to generate a classification structure including a classification label, a raw data feature, and a timestamp; and verifying the classified and calibrated data on the blockchain and storing the classified and calibrated data on the blockchain in categories, and generating a unique index. Through automatic data collection, a multidimensional classification rule, a high-precision classification algorithm, and verification on the blockchain, the data processing efficiency and accuracy are improved, ensuring the authenticity, integrity, and traceability of classified data.

## Description

### TECHNICAL FIELD

The present disclosure relates to the technical field of data classification and blockchain data, and in particular, to a classification method and a classification system for outputting data transmitted on a blockchain, a device, and a medium.

### BACKGROUND

Driven by the goals of peak carbon dioxide emissions and carbon neutrality, cross-departmental, cross-regional and cross-business data sharing needs to be achieved in a data transmission and utilization process. With the rapid development of the blockchain technology, various blockchain platforms and applications are emerging one after another, resulting in a massive amount of on-blockchain data. The data contains a great value, but also faces problems such as data islands, uneven data quality, and difficulty in effectively using data. In order to better explore the value of blockchain data, effective classification and management of such data have become particularly important. The difficulties and pain points in blockchain data classification are mainly reflected in the following aspects.

The data volume grows exponentially, and there are diverse types: the blockchain stores various types of data, such as transaction records, smart contract codes, asset information on the blockchain, and user behavior data, and the data volume grows exponentially. It is difficult for traditional data management methods to deal with such huge and complex data.

The value of data is huge, but the utilization rate is low: the blockchain data contains valuable information such as transaction behaviors, user portraits, and market trends. However, due to the lack of effective classification and governance, it is difficult to fully explore and utilize the value of the data.

The data island phenomenon is severe: the data formats between different blockchain platforms are not uniform, and there is a lack of interoperability, which leads to a severe data island phenomenon and makes it difficult to perform cross-chain data analysis and application.

The demand for data security and privacy protection is growing: the blockchain data has the characteristic of openness, transparency and tamper-proof performance, but also faces security risks such as data leakage and privacy invasion. It is necessary to classify and grade the data and take corresponding security protection measures.

Regulatory compliance requirements are constantly improving: as the application scope of the blockchain technology continues to expand, governments around the world are also increasing their regulatory efforts on the blockchain data. It is necessary to classify data to meet the regulatory compliance requirements of different countries and regions.

To sum up, as the requirements for secure classification and protection technologies in the open sharing of on-blockchain data continue to rise, there is an urgent need to address the issue of cross-departmental, cross-regional and cross-business data security sharing. It is necessary to break through the key technology of data classification, break data islands, improve the data quality, explore the data value, ensure data security, and meet regulatory compliance requirements, so as to promote the healthy development and application implementation of the blockchain technology, further provide effective support for data security governance, and improve the security management and control level of on-blockchain data.

### SUMMARY

In view of the above problems, the present disclosure has been made.

Therefore, the technical problem to be solved by the present disclosure is how to break through the key technology of data classification, break the data islands, improve the data quality, explore the data value, and ensure data security.

In order to solve the above technical problems, the present disclosure provides the following technical solution: a classification method for outputting data transmitted on a blockchain, including the following steps: acquiring raw data in a list of data transmitted on a blockchain from a data source, and performing pre-processing and diversified proofreading on the raw data, including removing abnormal values, supplementing missing values, and correcting erroneous values; formulating a data classification rule according to a business demand, and identifying a data classification feature using a clustering method; classifying and calibrating data based on the classification feature to generate a classification structure including a classification label, a raw data feature, and a timestamp; and verifying the classified and calibrated data on the blockchain and storing the classified and calibrated data on the blockchain in categories, and generating a unique index.

As a preferred solution of the classification method for outputting data transmitted on the blockchain according to the present disclosure, the step of acquiring raw data in a list of data transmitted on a blockchain from a data source includes: determining the data source according to the data generation situation and the data classification processing demand, clarifying a data platform that needs to be used for data collection, collecting data information including transaction record data, sensor parameter data and market environment data, and acquiring data sources from different data platforms; identifying information from corresponding data platforms and databases according to the determined data source, and selecting a data interface or a data form which is required as the data source to acquire the required data; performing data pre-processing on the raw data extracted from the data source, where data pre-processing content includes data cleaning, format conversion, and data normalization; and performing diversified proofreading on the pre-processed data.

As a preferred solution of the classification method for outputting data transmitted on the blockchain according to the present disclosure, the step of formulating a data classification rule according to a business demand, and identifying a data classification feature using a clustering method includes: performing business demand analysis, clarifying a data classification scenario according to a name, a source and a scale of the collected data, sorting out the required data type, and clarifying an objective and a standard of data classification; performing data attribute analysis, clearly analyzing attributes and characteristics of data according to the obtained data classification information, and determining a dimension of data classification; formulating the data classification rule according to the business demand analysis and the data attribute analysis; and identifying the data classification feature according to the formed data classification rule.

As a preferred solution of the classification method for outputting data transmitted on the blockchain according to the present disclosure, the step of classifying and calibrating data based on the classification feature to generate a classification structure including a classification label, a raw data feature, and a timestamp includes: selecting an algorithm of the data classification feature, and selecting an appropriate classification algorithm according to the business demand obtained from the analysis; and comparing and analyzing the identified classification feature by using the determined algorithm, identifying a difference and a similarity between the data, quantifying a distance between the features, and determining a classification basis of data according to the distance, which is expressed as: $\left|\left|{x}_{i}-{μ}_{k}\right|\right| = \sqrt{{\sum }_{d = 1}^{D} {\left({x}_{i}^{\left(d\right)}-{μ}_{k}^{\left(d\right)}\right)}^{2}}$ where D denotes the total number of data features, xᵢ^{(d)} denotes a value of data xᵢ in d features, and ${μ}_{k}^{\left(d\right)}$ denotes a value of data µₖ in d features, and the similarity is normalized to obtain a corresponding quantitative difference value between different features.

As a preferred solution of the classification method for outputting data transmitted on the blockchain according to the present disclosure, the step of classifying and calibrating data based on the classification feature to generate a classification structure including a classification label, a raw data feature, and a timestamp further includes: classifying data according to the corresponding quantitative difference value between different features, where a classification method includes classifying and calibrating data using a line classification method, a surface classification method or a mixed classification method according to the business demand, the line classification method classifies the data according to a single feature, the surface classification method classifies the data according to a plurality of features, and the mixed classification method combines the line classification method and the surface classification method to classify the data at multiple levels to finally form a classification result; and generating a corresponding classification label for each data according to the determined classification result, where the classification label contains category information, the raw data feature, and the timestamp of data, and information about the classification label, the raw data feature, and the timestamp is integrated to construct the classification structure of classified data.

As a preferred solution of the classification method for outputting data transmitted on the blockchain according to the present disclosure, the step of verifying the classified and calibrated data on the blockchain and storing the classified and calibrated data on the blockchain in categories includes: storing the processed data on the blockchain, storing the classified and calibrated data on the blockchain in categories according to the data classification structure, and achieving storage on the blockchain through a distributed ledger technology of the blockchain; and comparing and verifying the data stored on the blockchain, verifying the stored data by using a consensus mechanism of the blockchain, calculating a hash value of each data block, storing the hash value on the blockchain, verifying whether the hash values of the data are the same through the consensus mechanism of a blockchain network, and ensuring that the data has not been tampered with.

As a preferred solution of the classification method for outputting data transmitted on the blockchain according to the present disclosure, the step of generating a unique index includes: generating a unique index for the data that has passed the verification on the blockchain, and generating a unique index for each classified data according to data storage characteristics and a data structure, generating the unique index based on information about the classification label, the timestamp, and the hash value of data, and quickly querying and retrieving the classified data stored on the blockchain through the unique index.

Another objective of the present disclosure is to provide a classification system for outputting data transmitted on a blockchain.

In order to solve the above technical problems, the present disclosure provides the following technical solution: a classification system for outputting data transmitted on a blockchain, where the system includes a data acquisition module, a data classification feature identification module, a classification structure generation module, and an on-blockchain storage module; the data acquisition module is configured to acquire raw data in a list of data transmitted on a blockchain from a data source, and perform pre-processing and diversified proofreading on the raw data, including removing abnormal values, supplementing missing values, and correcting erroneous values; the data classification feature identification module is configured to formulate a data classification rule according to a business demand, and identify a data classification feature using a clustering method; the classification structure generation module is configured to classify and calibrate data based on the classification feature to generate a classification structure including a classification label, a raw data feature, and a timestamp; and the on-blockchain storage module is configured to verify the classified and calibrated data on the blockchain and store the classified and calibrated data on the blockchain in categories, and generate a unique index.

The present disclosure provides a computer device, including a memory and a processor, where the memory stores a computer program, and the processor, when executing the computer program, implements the steps of the classification method for outputting data transmitted on the blockchain.

The present disclosure provides a computer-readable storage medium on which a computer program is stored, where the computer program, when executed by a processor, implements the steps of the classification method for outputting data transmitted on the blockchain.

The present disclosure has the following beneficial effects. According to the present disclosure, automatic data collection is achieved through open source tools or self-developed tools, manual intervention is reduced, and the efficiency and the real-time performance of data collection are improved. At the same time, the accuracy and the integrity of data are ensured through multi-source data comparison and automatic verification, and data errors and deviations are reduced. The present disclosure also uses advanced algorithms and tools to remove abnormal values, supplement missing values, and correct erroneous values for data, thereby improving data quality, and laying a solid foundation for subsequent analysis.

According to the business demand and the data feature, the present disclosure formulates multi-dimensional classification rules (for example, according to attributes, sources, sensitivity, and the like), improves the flexibility and the accuracy of classification, and dynamically adjusts the classification rules by analyzing the most sensitive features of data (such as privacy importance), so as to ensure that sensitive data are effectively protected. At the same time, the classification rule of the present disclosure is closely combined with the business demand to ensure that data classification can directly support business decisions and application scenarios.

The present disclosure uses an advanced classification algorithm (a line classification method, a surface classification method, and a mixed classification method) to improve the precision and efficiency of data classification and meet the demand of large-scale data processing. At the same time, a dynamic classification label is generated according to the data feature and the timestamp to ensure that the classification result can reflect the latest state of data, and the classification label, the raw data feature, and the timestamp are integrated into structured data, thereby facilitating subsequent storage and query, and improving the standardization of data management.

According to the present disclosure, data storage on the blockchain is achieved through the blockchain technology, thereby ensuring the tamper-proof performance and traceability of data, and improving the security and credibility of data. At the same time, a blockchain consensus mechanism (such as Proof of Work (PoW) and Proof of Stake (PoS)) is used to automatically verify the data to ensure the authenticity and integrity of the data and reduce manual intervention. At last, a unique index is generated for classified data, thereby facilitating quick query and retrieval, and improving the efficiency of data management and the user experience. The transparency of the blockchain technology enables the data storage and verification process to be audited, improving the credibility and compliance of data.

### BRIEF DESCRIPTION OF THE DRAWINGS

In order to explain the technical solution of the embodiment of the present disclosure more clearly, the drawings needed in the description of the embodiment will be briefly introduced below. Obviously, the drawings in the following description are only some embodiments of the present disclosure. For those skilled in the art, other drawings can be obtained according to these drawings without paying creative labor.
FIG. 1 is an overall flow chart of a classification method for outputting data transmitted on a blockchain according to an embodiment of the present disclosure.
FIG. 2 is a diagram of a process of establishing an item header table of a classification method for outputting data transmitted on a blockchain according to an embodiment of the present disclosure.
FIG. 3 is an example diagram of a process of establishing a Frequent Pattern (FP)-Tree of a classification method for outputting data transmitted on a blockchain according to an embodiment of the present disclosure.
FIG. 4 is a module diagram of a system solution of a classification system for outputting data transmitted on a blockchain according to an embodiment of the present disclosure.

### DETAILED DESCRIPTION OF THE EMBODIMENTS

In order to make the above objectives, features and advantages of the present disclosure more obvious and understandable, the detailed description of the present disclosure will be described in detail with reference to the drawings in the specification. Obviously, the described embodiments are some of the embodiments of the present disclosure, rather than all of the embodiments. Based on the embodiments in the present disclosure, all other embodiments obtained by those skilled in the art without paying creative labor should belong to the scope of protection of the present disclosure.

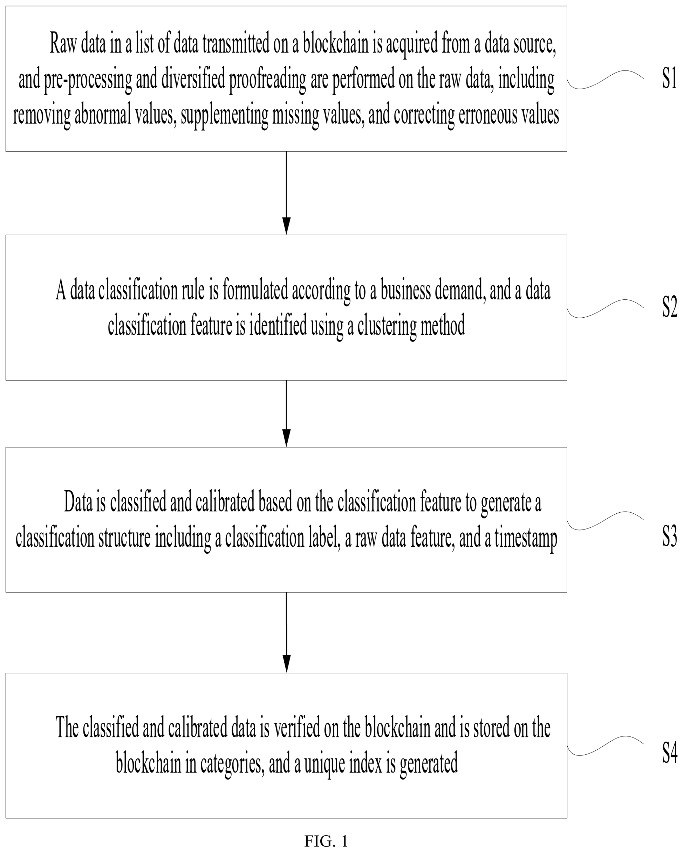

With reference to FIG. 1, Embodiment 1 is a first embodiment of the present disclosure. This embodiment provides a classification method for outputting data transmitted on a blockchain, including: acquiring raw data in a list of data transmitted on a blockchain from a data source, and performing pre-processing and diversified proofreading on the raw data, including removing abnormal values, supplementing missing values, and correcting erroneous values; formulating a data classification rule according to a business demand, and identifying a data classification feature using a clustering method; classifying and calibrating data based on the classification feature to generate a classification structure including a classification label, a raw data feature, and a timestamp; and verifying the classified and calibrated data on the blockchain and storing the classified and calibrated data on the blockchain in categories, and generating a unique index.

S1, raw data in a list of data transmitted on a blockchain is acquired from a data source, and pre-processing and diversified proofreading are performed on the raw data, including removing abnormal values, supplementing missing values, and correcting erroneous values.

The core raw data in the list of data transmitted on the blockchain is collected from the data source, and processing including pre-processing and diversified proofreading is performed on the data through the data processing means to ensure the accuracy and integrity of the data. Through open source data tools or self-developed tools combined with the background information of on-blockchain data collected through preliminary research, the automatic collection of on-blockchain data required in a series of blockchain transaction processes, including transaction record data, sensor parameter data and market environment data, is achieved. Then, the data is processed, such as removing abnormal values, supplementing missing values, and correcting erroneous values, thereby ensuring the accuracy and rationality of the subsequent classification step.

S101, the data source is determined according to the data generation situation and the data classification processing demand, a data platform that needs to be used for data collection is clarified, data information including transaction record data, sensor parameter data and market environment data is collected, and data sources from different data systems or platforms are acquired, such as exchanges, Internet of Things devices, market data providers, and the like.

S102, information from corresponding data platforms and databases is identified according to the source determined in S101, and a data interface or a data form which is required is selected as the data source to acquire the required data. Open source data tools or self-developed tools are used to automatically extract data from various data sources regularly or in real time.

S103, data pre-processing is performed on the raw data automatically extracted from the data source in S102, where data pre-processing content includes data cleaning, format conversion, and data normalization. In this step, the operation specifically includes: removing abnormal values, in which abnormal values are identified and removed in data through a statistical method or a machine learning algorithm; processing missing values, in which the missing data is supplemented using a method such as a mean method, a median method, and an interpolation method; and correcting erroneous values, in which the erroneous values in the data are corrected through a data verification rule or manual auditing.

S104, diversified proofreading is performed on the data which has been pre-processed in Step S103 to ensure the accuracy and integrity of the data. The proofreading method includes comparing the data with other data sources, manual auditing or using automatic verifying tools. The proofreading information includes the completeness of data items, the completeness of data information, the accuracy of data timestamp information, and the like.

Traditional data collection usually relies on manual or semi-automatic methods, in which the data source is single, and there is a lack of real-time performance. Data pre-processing usually requires manual intervention, which is low in efficiency. However, the existing data cleaning technology often relies on a simple rule or script, so that it is difficult to process complex abnormal values, missing values and erroneous values, and there is a lack of automation ability. According to the present disclosure, automatic data collection is achieved through open source tools or self-developed tools, manual intervention is reduced, and the efficiency and the real-time performance of data collection are improved. At the same time, the accuracy and the integrity of data are ensured through multi-source data comparison and automatic verification, and data errors and deviations are reduced. The present disclosure also uses advanced algorithms and tools to remove abnormal values, supplement missing values, and correct erroneous values for data, thereby improving data quality, and laying a solid foundation for subsequent analysis.

S2, a data classification rule is formulated according to a business demand, and a data classification feature is identified using a clustering method.

According to the business demand, the basic rule of classification of data transmitted on the blockchain is formulated. The classification feature corresponding to the data is determined using an attribute clustering method or a characteristic clustering method according to the corresponding attributes or characteristics of the data, thereby facilitating subsequent classification of the data according to the features. The method of formulating the data classification rule is formulated according to the data classification dimension and the breadth of data sources. According to the name, the introduction and the source of data, the data are classified into categories such as transaction data, user data, transmission parameters, and blockchain information data, and then the classification features of data are classified according to the most sensitive features contained in different types of data, such as privacy importance which is the most sensitive feature of privacy information.

S201, business demand analysis is performed, the business demand of data classification is analyzed according to a name, a source and a scale of the collected data, and an objective and a standard of data classification are clarified. For example, after determining the business demand, a rule is formed, and a guidance document and information are formulated to judge whether it is necessary to classify according to the data type, the data source, the data sensitivity, and the like, thereby facilitating the determination of the data features in the subsequent steps.

S202, data attribute analysis is performed, a guidance document and information are formulated according to the rule obtained in S201, attributes and characteristics of data are clearly analyzed, and a dimension of data classification is determined. For example, the transaction data may include attributes such as transaction amount, transaction time, and transaction parties. User data may contain attributes such as user IDs, user behaviors, and user preferences. A list of data attributes or characteristics corresponding to the data is sorted out and formed to facilitate the formulation and use of the classification rule.

S203, the data classification basic rule is formulated according to Step S201 and Step S202. For example, the transaction data is classified according to attributes such as the transaction type, transaction amount, and transaction time. The user data is classified according to attributes such as user IDs, user behaviors, and user preferences. The sensor parameter data is classified according to attributes such as the sensor type, the parameter value, and the timestamp. The market environment data is classified according to attributes such as the market type, the market trend, and the market fluctuation. The information about the data classification basic rule is formed for the subsequent identification and classification of the data sensitive feature.

S204, the data sensitive feature is identified according to the information about the data classification basic rule formed in Step S203. According to the sensitive features of different types of data, the classification rule is further refined. For example, private data can be classified according to the privacy importance. Sensitive data can be classified according to the security level of data. Appropriate feature attributes of different data can be determined to refine the subsequent classification.

Traditional data classification usually relies on manual experience or simple rules. The classification dimension is single, so that it is difficult to deal with complex data features and business demands. Moreover, the prior art has limited ability to identify the sensitive feature, and usually relies on static rules, so that it is difficult to dynamically adapt to the data change. According to the business demand and the data feature, the present disclosure formulates multi-dimensional classification rules (for example, according to attributes, sources, sensitivity, and the like), improves the flexibility and the accuracy of classification, and dynamically adjusts the classification rules by analyzing the most sensitive features of data (such as privacy importance), so as to ensure that sensitive data are effectively protected. At the same time, the classification rule of the present disclosure is closely combined with the business demand to ensure that data classification can directly support business decisions and application scenarios.

S3, data is classified and calibrated based on the classification feature to generate a classification structure including a classification label, a raw data feature, and a timestamp.

The algorithm is used to compare and analyze a difference and a similarity between the classification features of the on-blockchain data in S2. According to the business classification demand, the method of combining a line classification method, a surface classification method, and a mixed classification method is used to classify and calibrate data, generate a corresponding classification label, and identify the type of data. Information about the classification label, the raw data feature, and the timestamp is integrated to construct the reference basis and the data classification structure of classified data.

S301, an algorithm of the data classification feature is selected, and an appropriate classification algorithm is selected according to the business demand and the data feature obtained from the analysis in Step S2. According to the demands of efficiency, accuracy and classification ability required in classification business scenarios, decision analysis and selection are performed on the commonly used classification algorithms, including a decision tree, a support vector machine, and K-means clustering, and an appropriate algorithm is selected for subsequent classification and calibration.

S302, the classification feature determined in S2 is compared and analyzed by using the algorithm determined in S301, a difference and a similarity between the data are identified, a similarity or a distance between the features is quantified, and a classification basis of data is determined according to the similarity or the distance. The similarity is between 0 and 1. The closer the value is to 1, the greater the similarity is, and the more inclined it is to classify the data corresponding to the two types of features together. The distance is between 0 and 1. The closer the value is to 0, the closer the distance is, and the more inclined it is to classify the data corresponding to the two types of features together. Through analysis, a corresponding quantitative difference value between different features is obtained.

S303, the corresponding value is quantified according to the feature determined in S302, and data is classified. A classification method includes classifying and calibrating data using a line classification method, a surface classification method or a mixed classification method according to the business demand. The three methods include the line classification method classifying the data according to a single feature, such as the size of the transaction amount. The surface classification method classifies the data according to a plurality of features, such as transaction amount and transaction time. The mixed classification method combines the line classification method and the surface classification method to classify the data at multiple levels to finally form a classification result.

S304, a corresponding classification label is generated for each data according to the classification result determined in S303. The classification label contains category information, the raw data feature, and the timestamp of data. Information about the classification label, the raw data feature, and the timestamp is integrated to construct the reference basis and the data structure of classified data, thereby facilitating subsequent data storage and query.

Traditional data classification usually relies on a simple clustering algorithm or manual calibration, which is low in classification precision and is difficult to process large-scale data. The classification label is usually generated statically, and there is a lack of adaptability to dynamic changes of data. The present disclosure uses an advanced classification algorithm (a line classification method, a surface classification method, and a mixed classification method) to improve the precision and efficiency of data classification and meet the demand of large-scale data processing. At the same time, a dynamic classification label is generated according to the data feature and the timestamp to ensure that the classification result can reflect the latest state of data, and the classification label, the raw data feature, and the timestamp are integrated into structured data, thereby facilitating subsequent storage and query, and improving the standardization of data management.

S4, the classified and calibrated data is verified on the blockchain and is stored on the blockchain in categories, and a unique index is generated.

The classified and calibrated data is stored and verified on the blockchain. The classified and calibrated data is stored on the blockchain in categories together with the data structure, and a mechanism such as a blockchain consensus mechanism is used for the stored data to verify the classified data on the blockchain, thereby ensuring the authenticity and integrity of the data. Finally, according to the data storage characteristics and the data structure, a unique index is generated for the classified data, thereby facilitating subsequent query and retrieval.

S401, the processed data is stored on the blockchain, the classified and calibrated data is stored on the blockchain in categories according to the data structure, and storage on the blockchain can be achieved through a distributed ledger technology of the blockchain to ensure the tamper-proof performance and traceability of data.

S402, the data stored on the blockchain is compared and verified. The stored data is verified by using a consensus mechanism (such as PoW, PoS, and the like) of the blockchain to ensure the authenticity and integrity of the data. The specific steps include data hash calculation: calculating a hash value of each data block, and storing the hash value on the blockchain; and consensus verification: verifying whether the hash values of the data are the same through the consensus mechanism of a blockchain network, and ensuring that the data has not been tampered with.

S403, a unique index is generated for the data that has passed the verification on the blockchain. A unique index is generated for each classified data according to data storage characteristics and a data structure. The unique index is generated based on information about the classification label, the timestamp, and the hash value of data, thereby facilitating subsequent query and retrieval. Users can quickly query and retrieve the classified data stored on the blockchain through the unique index. Query and retrieval are achieved through a blockchain browser, an API interface or a custom query tool.

Traditional data storage usually relies on a centralized database, which has the risk of data tampering and loss, and lacks transparency and traceability. Data verification usually relies on manual auditing or simple verification rules, and it is difficult to ensure the authenticity and integrity of data. According to the present disclosure, data storage on the blockchain is achieved through the blockchain technology, thereby ensuring the tamper-proof performance and traceability of data, and improving the security and credibility of data. At the same time, a blockchain consensus mechanism (such as Proof of Work (PoW) and Proof of Stake (PoS)) is used to automatically verify the data to ensure the authenticity and integrity of the data and reduce manual intervention. At last, a unique index is generated for classified data, thereby facilitating quick query and retrieval, and improving the efficiency of data management and the user experience. The transparency of the blockchain technology enables the data storage and verification process to be audited, improving the credibility and compliance of data.

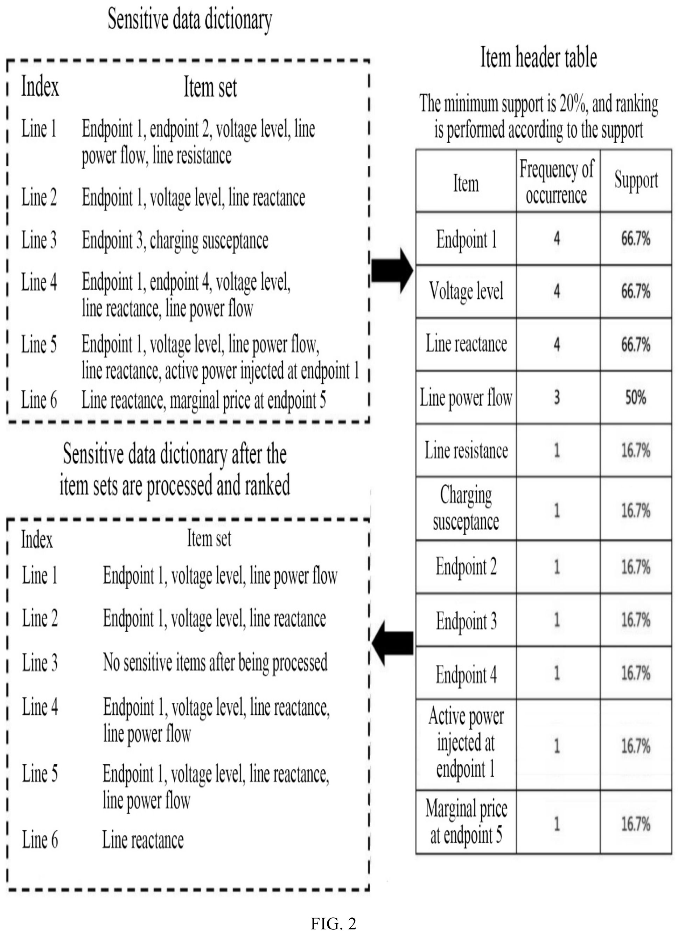

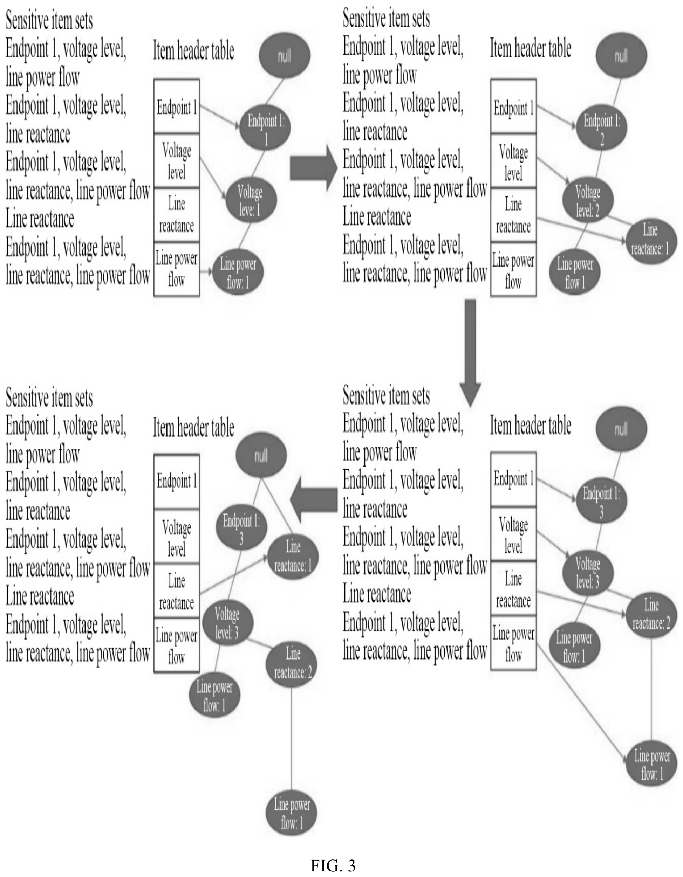

With reference to FIG. 2 and FIG. 3, Embodiment 2 is a second embodiment of the present disclosure, which provides a classification method for outputting data transmitted on a blockchain. In order to verify the beneficial effects of the present disclosure, scientific demonstration is conducted through experiments.

In a data preparation stage, the classification of electric carbon data needs to acquire two types of data. 1. A lookup table of electric carbon sensitive data contains the name of each sensitive field of electric carbon data (that is, a rule table). 2. The electric carbon data table in which data is to be graded contains a plurality of sections of each data field. The sections are specific objects to be graded, such as each transmission line and each transformer substation. Each section contains an indefinite number of specific data of each field of the electric carbon system, such as active power, reactive power, a node voltage amplitude and phase angle, a locational marginal price, a maximum value and a minimum value of active power output of power generation, and the like (that is, a data table). The requirement in this example is to classify the data according to sensitivity.

A specific method of establishing a sensitive data dictionary is as follows: enumerating the objects to be graded in the electric carbon data table and using the objects as indexes in the sensitive data dictionary; traversing the sensitive data index, for example, searching all data fields under the index name (such as a specific line, substation, and the like) in the electric carbon data table; creating a corresponding item set for the index in the sensitive data dictionary; judging whether all data fields under the index are sensitive based on the electric carbon sensitive data lookup table, and if so, adding the field name into the item set of the current index; and after the traversal, finishing constructing the sensitive data dictionary.

In the present disclosure, an FP-Tree (Frequent Pattern Tree) built based on the sensitive data dictionary is used to explore sensitive data frequent item sets, thereby providing a basis for classification. The establishment of the FP-Tree depends on the establishment of the item header table at first. The specific method is as follows: scanning all the item sets in the sensitive data dictionary to obtain the count of all frequent item sets 1; deleting the items whose support is lower than the threshold, placing the frequent item sets 1 into the item header table, and arranging the frequent item sets 1 in a descending order of support; scanning all the item sets in the sensitive data dictionary, eliminating all infrequent item sets 1 among the item sets under each index, and then arranging the infrequent item sets 1 in a descending order of support. The support refers to the probability that the items appear in all the index item sets, which is calculated by the ratio of the number of occurrences of the items to the number of index sets. The establishment of the item header table can be described using a specific example of FIG. 2.

As can be seen from the figure, each row of the data shown is an index set, and all the items in the item header table are ranked according to the frequency that the items appear in each index set. In this example, the support threshold is set to 20%. Therefore, the items below the threshold may be deleted from the raw data set.

Second, the FP-Tree for exploring frequent item sets needs to be established according to the item header table. At the beginning, the FP-Tree has no data. Therefore, when establishing the FP-Tree, the ranked item sets need to be read according to the index order in the dictionary, and the FP-Tree is inserted. For each item set, the items need to be inserted into the FP-Tree according to the ranked order of the item header table: the nodes ranked higher are ancestor nodes, and those ranked lower are descendant nodes. If there is a shared ancestor node, the count of the corresponding shared ancestor node is increased by 1. After insertion, if a new node appears, the node corresponding to the item header table may be linked to a new node through the node linked list. After all the item sets are inserted into the FP-Tree, the establishment of the FP-Tree is completed, and the classification of sensitive data is basically achieved. The specific method is shown in FIG. 3.

As can be seen from FIG. 3, the process of establishing the FP-Tree takes the data in 6 item header tables in FIG. 2 as an example, showing the specific process of inserting items in the first four index sets into the FP-Tree.

After obtaining the FP-Tree and the item header table, this example uses the FP-growth algorithm to explore frequent item sets. First, the items at the bottom of the item header table are traversed in sequence: for each item in the item header table corresponding to the FP-Tree, the corresponding conditional pattern base is found. The so-called conditional pattern takes the node to be explored as the FP subtree corresponding to a leaf node. After the FP subtree is obtained, the count of each node in the subtree is set as the count of leaf nodes, and the nodes whose count is lower than the support are deleted. At this time, the frequent item sets can be obtained by recursive exploration based on the conditional pattern. At this time, the sensitive features of the objects to be graded can be extracted according to the sensitive data dictionary and the sensitive data frequent item sets. The specific method is as follows: first, traversing all indexes in the sensitive data dictionary, and establishing a feature set dictionary corresponding to each index. The indexes in the feature set dictionary are still the objects to be graded, and the contents are the feature vectors corresponding to the indexes. The vector dimension is the same as the number of frequent item sets. Each field is the variable of 0, 1 characterizing whether each frequent item set is included in the index item sets of the sensitive data dictionary. In the traversal, for the current index, the corresponding item sets are first taken out from the sensitive data dictionary, and then the frequent item sets are traversed to judge whether each frequent item set is included in the index item set. If so, the corresponding feature variable has a value of 1, and otherwise, the corresponding feature variable has a value of 0. After the traversal, the sensitive data classification set of the electric carbon data can be obtained.

Embodiment 3, which is a third embodiment of the present disclosure, is different from the first two embodiments in the following aspects.

The functions can be stored in a computer-readable storage medium if the functions are achieved in the form of software function units and sold or used as independent products. Based on this understanding, essentially, the part of the technical solution of the present disclosure that contributes to the prior art, or a part of the technical solution itself, can be embodied in the form of a software product. The computer software product is stored in a storage medium and includes several instructions to cause a computer device (which may be a personal computer, a server, a network device, and the like) to execute all or part of the steps of the method described in various embodiments of the present disclosure. The aforementioned storage medium includes various media that can store program codes such as: a USB flash drive, a mobile hard disk, a Read-Only Memory (ROM), a Random Access Memory (RAM), a magnetic disk, or an optical disk.

The logic and/or steps represented in the flowchart or described in other manners herein, for example, can be regarded as a sequenced list of executable instructions for achieving logical functions, and can be embodied in any computer-readable medium for use by or in combination with an instruction execution system, apparatus or device (such as a computer-based system, a system including a processor, or other systems that can fetch and execute instructions from the instruction execution system, apparatus or device). For the purposes of this specification, a "computer-readable medium" can be any apparatus that can contain, store, communicate, propagate or transmit a program for use by or in connection with an instruction execution system, apparatus or device.

A more specific example (a non-exhaustive list) of the computer-readable medium includes: an electrical connection part (an electronic device) with one or more wires, a portable computer disk box (a magnetic device), a Random Access Memory (RAM), a Read-Only Memory (ROM), an Erasable Programmable Read-Only Memory (EPROM or a flash memory), an optical fiber device, and a portable Compact Disk Read-Only Memory (CD-ROM). In addition, the computer-readable medium may even be paper or other suitable media on which the program can be printed, because the program can be obtained electronically by, for example, optically scanning the paper or other media, and then editing, interpreting or processing the paper or other media in other suitable manners if necessary, and then can be stored in a computer memory.

It should be understood that various parts of the present disclosure can be implemented by hardware, software, firmware or a combination thereof. In the above embodiments, a plurality of steps or methods can be achieved by software or firmware stored in a memory and executed by an appropriate instruction execution system. For example, if the steps or methods are achieved by hardware, as in another embodiment, the steps or methods can be achieved by any of the following technologies known in the art or a combination thereof: a discrete logic circuit with a logic gate for achieving a logic function on a data signal, an application specific integrated circuit with a suitable combinational logic gate, a Programmable Gate Array (PGA), a Field Programmable Gate Array (FPGA), and the like.

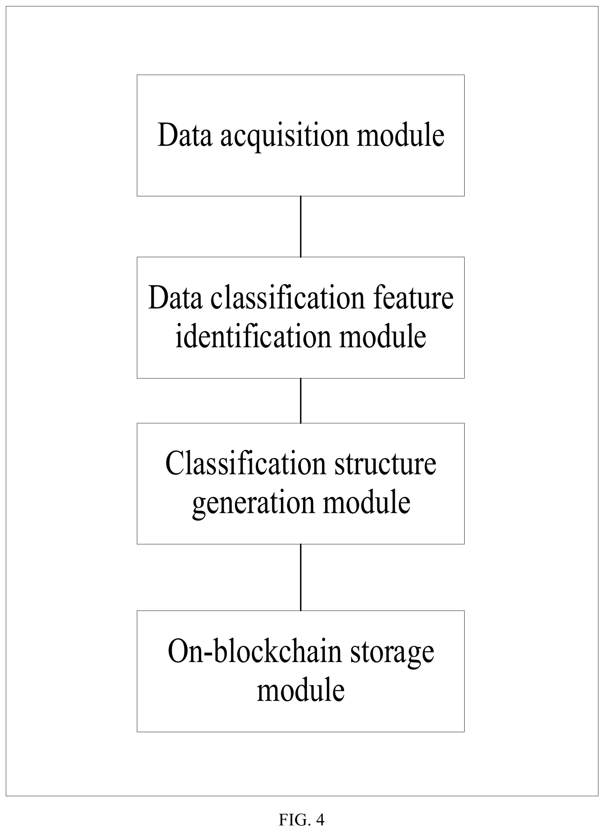

With reference to FIG. 4, Embodiment 4 is a fourth embodiment of the present disclosure. This embodiment provides a classification system for outputting data transmitted on a blockchain, where the system includes a data acquisition module, a data classification feature identification module, a classification structure generation module, and an on-blockchain storage module.

The data acquisition module is configured to acquire raw data in a list of data transmitted on a blockchain from a data source, and perform pre-processing and diversified proofreading on the raw data, including removing abnormal values, supplementing missing values, and correcting erroneous values.

The data classification feature identification module is configured to formulate a data classification rule according to a business demand, and identify a data classification feature using a clustering method.

The classification structure generation module is configured to classify and calibrate data based on the classification feature to generate a classification structure including a classification label, a raw data feature, and a timestamp.

The on-blockchain storage module is configured to verify the classified and calibrated data on the blockchain and store the classified and calibrated data on the blockchain in categories, and generate a unique index.

It should be noted that the above embodiments are only used to illustrate the technical solution of the present disclosure, rather than limit the technical solution. Although the present disclosure has been described in detail with reference to the preferred embodiments, those skilled in the art should understand that the technical solution of the present disclosure can be modified or replaced by equivalents without departing from the spirit and scope of the technical solution, which should be included in the scope of the claims of the present disclosure.

## Claims

1. A classification method for outputting data transmitted on a blockchain, comprising:
acquiring raw data in a list of data transmitted on a blockchain from a data source, and performing pre-processing and diversified proofreading on the raw data, including removing abnormal values, supplementing missing values, and correcting erroneous values;
formulating a data classification rule according to a business demand, and identifying a data classification feature using a clustering method;
classifying and calibrating data based on the classification feature to generate a classification structure including a classification label, a raw data feature, and a timestamp; and
verifying the classified and calibrated data on the blockchain and storing the classified and calibrated data on the blockchain in categories, and generating a unique index.

2. The classification method for outputting data transmitted on the blockchain according to claim 1, wherein the step of acquiring raw data in a list of data transmitted on a blockchain from a data source comprises:
determining the data source according to the data generation situation and the data classification processing demand, clarifying a data platform that needs to be used for data collection, collecting data information comprising transaction record data, sensor parameter data and market environment data, and acquiring data sources from different data platforms;
identifying information from corresponding data platforms and databases according to the determined data source, and selecting a data interface or a data form which is required as the data source to acquire the required data;
performing data pre-processing on the raw data extracted from the data source, wherein data pre-processing content comprises data cleaning, format conversion, and data normalization; and
performing diversified proofreading on the pre-processed data.

3. The classification method for outputting data transmitted on the blockchain according to claim 2, wherein the step of formulating a data classification rule according to a business demand, and identifying a data classification feature using a clustering method comprises:
performing business demand analysis, clarifying a data classification scenario according to a name, a source and a scale of the collected data, sorting out the required data type, and clarifying an objective and a standard of data classification;
performing data attribute analysis, clearly analyzing attributes and characteristics of data according to the obtained data classification information, and determining a dimension of data classification;
formulating the data classification rule according to the business demand analysis and the data attribute analysis; and
identifying the data classification feature according to the formed data classification rule.

4. The classification method for outputting data transmitted on the blockchain according to claim 3, wherein the step of classifying and calibrating data based on the classification feature to generate a classification structure including a classification label, a raw data feature, and a timestamp comprises:
selecting an algorithm of the data classification feature, and selecting an appropriate classification algorithm according to the business demand obtained from the analysis; and
comparing and analyzing the identified classification feature by using the determined algorithm, identifying a difference and a similarity between the data, quantifying a distance between the features, and determining a classification basis of data according to the distance, which is expressed as: $\left|\left|{x}_{i}-{μ}_{k}\right|\right| = \sqrt{{\sum }_{d = 1}^{D} {\left({x}_{i}^{\left(d\right)}-{μ}_{k}^{\left(d\right)}\right)}^{2}}$
where D denotes the total number of data features, xᵢ^{(d)} denotes a value of data xᵢ in d features, and ${μ}_{k}^{\left(d\right)}$ denotes a value of data µₖ in d features, and the similarity is normalized to obtain a corresponding quantitative difference value between different features.

5. The classification method for outputting data transmitted on the blockchain according to claim 4, wherein the step of classifying and calibrating data based on the classification feature to generate a classification structure including a classification label, a raw data feature, and a timestamp further comprises:
classifying data according to the corresponding quantitative difference value between different features, wherein a classification method includes classifying and calibrating data using a line classification method, a surface classification method or a mixed classification method according to the business demand, the line classification method classifies the data according to a single feature, the surface classification method classifies the data according to a plurality of features, and the mixed classification method combines the line classification method and the surface classification method to classify the data at multiple levels to finally form a classification result; and
generating a corresponding classification label for each data according to the determined classification result, wherein the classification label contains category information, the raw data feature, and the timestamp of data, and information about the classification label, the raw data feature, and the timestamp is integrated to construct the classification structure of classified data.

6. The classification method for outputting data transmitted on the blockchain according to claim 4, wherein the step of verifying the classified and calibrated data on the blockchain and storing the classified and calibrated data on the blockchain in categories comprises:
storing the processed data on the blockchain, storing the classified and calibrated data on the blockchain in categories according to the data classification structure, and achieving storage on the blockchain through a distributed ledger technology of the blockchain; and
comparing and verifying the data stored on the blockchain, verifying the stored data by using a consensus mechanism of the blockchain, calculating a hash value of each data block, storing the hash value on the blockchain, verifying whether the hash values of the data are the same through the consensus mechanism of a blockchain network, and ensuring that the data has not been tampered with.

7. The classification method for outputting data transmitted on the blockchain according to claim 4, wherein the step of generating a unique index comprises:
generating a unique index for the data that has passed the verification on the blockchain, and generating a unique index for each classified data according to data storage characteristics and a data structure, generating the unique index based on information about the classification label, the timestamp, and the hash value of data, and quickly querying and retrieving the classified data stored on the blockchain through the unique index.

8. A classification system for outputting data transmitted on a blockchain, applying the classification method for outputting data transmitted on the blockchain according to any one of claims 1 to 7, wherein the system comprises a data acquisition module, a data classification feature identification module, a classification structure generation module, and an on-blockchain storage module;
the data acquisition module is configured to acquire raw data in a list of data transmitted on a blockchain from a data source, and perform pre-processing and diversified proofreading on the raw data, including removing abnormal values, supplementing missing values, and correcting erroneous values;
the data classification feature identification module is configured to formulate a data classification rule according to a business demand, and identify a data classification feature using a clustering method;
the classification structure generation module is configured to classify and calibrate data based on the classification feature to generate a classification structure including a classification label, a raw data feature, and a timestamp; and
the on-blockchain storage module is configured to verify the classified and calibrated data on the blockchain and store the classified and calibrated data on the blockchain in categories, and generate a unique index.

9. A computer device, comprising a memory and a processor, wherein the memory stores a computer program, and the processor, when executing the computer program, implements the steps of the classification method for outputting data transmitted on the blockchain according to any one of claims 1 to 7.

10. A computer-readable storage medium on which a computer program is stored, wherein the computer program, when executed by a processor, implements the steps of the classification method for outputting data transmitted on the blockchain according to any one of claims 1 to 7.
